# EUROPÄISCHE PATENTSCHRIFT

(11) **EP 2 295 321 B1**
(45) Veröffentlichungstag und Bekanntmachung des Hinweises auf die Patenterteilung: **18.07.2018**
(21) Anmeldenummer: 10172407.8
(22) Anmeldetag: 10.08.2010
(51) Int. Cl.: B65B 35/36, B65G 47/08, B65B 21/06, B65B 35/30, B65G 47/26

(54) **Formiereinheit für eine Vielzahl von Artikeln in einer Einrichtung zum Verpacken der Artikel und Verfahren zum Verpacken einer Vielzahl von Artikeln**
forming unit for a number of items in a device for packaging the items and method for packaging a number of items
unité de formage d'une multitude d'articles dans un dispositif d'emballage et procédé d'emballage d'une multitude d'articles

(30) Priorität: 11.09.2009 DE 102009043981
(43) Veröffentlichungstag der Anmeldung: 16.03.2011
(73) Patentinhaber: Krones AG, 93073 Neutraubling (DE)
(72) Erfinder: Hutter, Alban, 93073 Neutraubling (DE); Westermeier, Christian, 93073 Neutraubling (DE)
(74) Vertreter: Reichert & Lindner Partnerschaft Patentanwälte

(56) Entgegenhaltungen:
- DE-A1- 2 612 839
- DE-A1- 3 425 165
- DE-C- 730 985
- GB-A- 458 107

## Beschreibung

Die vorliegende Erfindung betrifft eine Formiereinheit für eine Vielzahl von Artikeln in einerEinrichtung zum Verpacken der Artikel, wobei die Einrichtung einen ersten Umsetzer und einen zweiten Umsetzer umfasst. Durch den ersten Umsetzer sind zumindest eine Reiher der Artikel von einem Zuförderer auf eine Formiereinheit mit einer Vielzahl von Formierelementen abstellbar.

Die vorliegende Erfindung betrifft ferner ein Verfahren zum Verpacken einer Vielzahl von Artikeln.

Die U.S.-Patentanmeldung US 2007/0277480 A1 offenbart ein kontinuierliches Verpackagungssystem zum Verpacken einer Vielzahl von Artikeln in Kartons. Die Artikel werden nicht aufgestaut und dann mit einem Greifer umgesetzt. Stattdessen werden Gruppen von Artikeln jeweils auf einen Karton und dieser auf jeweils eine Keilformation ("wedge") gesetzt. Die Gruppen von Artikeln werden hintereinander auf einer Reihe der Keilformationen entlang der Laufrichtung transportiert. Durch die Keilformationen werden die Gruppen von Artikeln jeweils mit einem Karton verpackt. Für unterschiedliche Formatierungen der Gruppen muss das Verpackagungssystem mit anderen Formierelementen umgerüstet werden.

Die internationale PCT-Patentanmeldung WO 2003/053824 A1 offenbart ein Verfahren und eine Vorrichtung zum Behandeln von Flaschen in einer Flaschenanlage. Die aufgereihten Flaschen werden von mindestens einem Flaschenumsetzer, der eine bewegliche Greifeinrichtung mit mehreren Greifelementen aufweist, auf ein oder mehrere bewegliche tischartige Zwischenträger umgesetzt. Die Flaschen werden über proprietäre Förderlinien (Gassen) in mehreren parallelen Reihen dem Flaschenumsetzer zugeführt werden und reihenselektiv mit einzeln steuerbaren Greifelementen auf den oder die Zwischenträger umgesetzt. Es erfolgt keine Gruppierung der Artikel.

Das deutsche Gebrauchsmuster DE 20 2005 019906 U1 offenbart eine Einrichtung zum Bilden von Mischgebinden von Artikeln mehrerer unterschiedlicher Sorten aus Sortengebinden. Ein Mischpacker mit mindestens einer Förderlinie für Sortengebinde und mindestens einer anderen Förderlinie für Mischgebinde sowie mindestens einem linien- beziehungsweise reihenübergreifenden Umsetzer zum Umsetzen der Stückgüter während des Transports von den Förderlinien und den Sortengebinden auf die Förderlinie(n) und die Mischgebinde ist vorgesehen.

Ferner ist in der deutschen Patentschrift DE 730 985 C eine Formiereinheit bekannt, die durch besondere Antriebsmittel einen Fördergurt derart bewegt, dass zu transportierende Artikel angehoben und seitlich auseinanderbewegt werden, um anschließend die Artikel in eine Einrichtung zum Verpacken zu verschieben.

Aufgabe der Erfindung ist, eine Formiereinheit für eine Vielzahl von Artikeln anzugeben, durch die die Artikel schnell, einfach, kostengünstig und variabel zu zu verpackenden Gruppen zusammenfassbar sind.

Die obige Aufgabe wird durch eine Formiereinheit gelöst, die die Merkmale des Patentanspruchs 1 umfasst.

Aufgabe der Erfindung ist ferner, ein Verfahren zum Verpacken einer Vielzahl von Artikeln anzugeben, durch das die Artikel schnell, einfach, kostengünstig und variabel zu zu verpackenden Gruppen zusammengefasst werden.

Die obige Aufgabe wird durch ein Verfahren gelöst, das die Merkmale des Patentanspruchs 10 umfasst.

Die erfindungsgemäße Formiereinheit für eine Vielzahl von Artikeln in einer Einrichtung zum Verpacken der Artikel umfasst einen ersten Umsetzer und einen zweiten Umsetzer, wobei durch den ersten Umsetzer mindestens

eine Reihe der Artikel von einem Zuförderer auf eine Formiereinheit abstellbar sind. Die Formiereinheit umfasst erfindungsgemäß eine Vielzahl von Formierelementen. Jedes Formierelement umfasst mindestens einen eigenen Antrieb und eine Absatzebene für mindestens einen Artikel. Durch den zweiten Umsetzer sind die durch die Formierelemente formierten Artikel in einer Verpackung einsetzbar, wobei der zweite
Umsetzer zum Ergreifen der Artikel entsprechend ausgebildet ist. Die Antriebe sind jeweils individuell ansteuerbar. Statt durch den ersten Umsetzer werden die Artikel also durch die Formierelemente verschoben. Vorteilhaft dabei ist, dass das Verschieben beziehungsweise Formieren der Artikel durch die sich unter den Artikeln befindlichen Formierelemente schneller, einfacher, kostengünstiger und variabler erfolgt als durch
einen Umsetzer beziehungsweise Greifer aus dem Stand der Technik. Letztere erfordern eine komplexe Mechanik und die Artikel müssen angehoben, bewegt und dann abgesetzt werden, um die Artikel zu verschieben. Dagegen werden die Artikel auf den erfindungsgemäßen Formierelementen auf einer Höhe nur individuell verfahren, ohne sie anzuheben.

Die Formierelemente können unterschiedlich ausgestaltet sein.

So ist in einer Ausführungsform mindestens eine diskrete Absetzposition für den jeweils abzusetzenden Artikel vorgesehen. Die Artikel werden auf die diskreten Absetzpositionen abgesetzt und sind dann üblicherweise nicht verschiebbar. Die diskreten Absetzpositionen sind beispielsweise als Einlassungen beziehungsweise Mulden ausgestaltet und/oder die diskreten Absetzpositionen weisen zumindest abschnittsweise andere Formen von Berandungen auf. Die auf die diskreten Absetzpositionen abgesetzten Artikel können nicht außerhalb dieser Berandungen verschoben werden.

In einer anderen Ausführungsform sind keine diskreten Absetzpositionen vorgesehen, sondern sind stattdessen an jeder Absetzebene zwei parallele zweite Trennelemente angebracht. Die auf die Absetzebenen abgesetzten Artikel sind parallel zu den jeweiligen zweiten Trennelementen auf den ganzen Absetzebenen verschiebbar. Beispielsweise werden die Artikel durch einen entsprechend gestalteteten Schieber gleichzeitig über alle Formierelemente auf den Absetzebenen der Formierelemente Stoß an Stoß zusammengeschoben, so dass die Artikel je Formierelement lückenlos angeordnet sind und solchermaßen weiterverarbeitet werden. Anschließend werden die so gruppierten Artikel beispielsweise jeweils durch einen zweiten Umsetzer in Verpackungen verbracht, in denen die Gruppen von Artikeln dann entsprechend und unverändert Stoß an Stoß angeordnet sind. Das Schieben der Artikel auf den Absetzebenen der Formierelemente kann vor, während oder nach dem Bewegen beziehungsweise Verfahren der Formierelemente durchgeführt werden.

Die Formierrichtung beim Bewegen beziehungsweise Verfahren der Formierelemente ist beispielsweise quer zur Laufrichtung des Zuförderers, das heißt der Zuförderer und die Formiereinheit sind in T-Form zueinander angeordnet (siehe Figuren 1, 3, 7, 8). Die Formierrichtung kann aber auch parallel, wenn der Zuförderer, die Formiereinheit und die Umsetzrichtung in H-Form zueinander angeordnet sind (sie he Figuren 9, 10), oder in einem anderen Winkel zur Laufrichtung ausgerichtet sein, ohne den Schutzbereich der Erfindung zu verlassen.

Die Formierelemente einschließlich der darauf abgestellten Artikel können durch ihre Antriebe beispielsweise entlang einer oder mehrerer Schienen geführt verfahrbar sein. Unabhängig von der Ausgestaltung der Formiereinheit und ihrer Formierelemente werden stets Gruppen von Artikeln oder einzelne Artikel verfahren. In beiden Fällen erfolgt das Verfahren der Formierelemente und somit der darauf abgesetzten Artikel beziehungsweise Gruppen getrennt und unabhängig voneinander. Die solchermaßen vereinzelten Artikel oder Gruppen von Artikeln werden dann in einer Abführichtung einer Weiterverarbeitung zugeführt. Beispielsweise werden die vereinzelten Artikel beziehungsweise die Gruppen von Artikeln in eine Verpackung abgesetzt und verpackt. Dafür kann ein zweiter Umsetzer vorgesehen sein, der die mit den Formierelementen formierten Artikel beziehungsweise Gruppen in die Verpackungen einsetzt. Der zweite Umsetzer ist zum Ergreifen der formierten Artikel entsprechend ausgebildet.

Bevorzugt umfasst die Einrichtung, insbesondere der Zuförderer an seinem Ende benachbart zur Formiereinheit, einen Anschlag für die Artikel. Bei Erreichen des Anschlags am Ende des Zuförders werden die Artikel aufgestaut. Falls die oben beschriebene T-Form vorliegt, werden die Artikel in mindestens einer Reihe quer zur Laufrichtung der Artikel beziehungsweise des Zuförderers aufgestaut. Es bilden sich also eine oder mehr Reihen von Artikeln am Anschlag. Diese mindestens eine Reihe wird durch den ersten Umsetzer (sogenannter linearer Umsetzer) auf die Formiereinheit umgesetzt. Die Reihen sind generell als lineare Reihen zu verstehen. Entspechend der Anzahl der auf der Formiereinheit abgesetzten Reihen von Artikeln müssen die Formierelemente angepasst sein. Im Falle der Ausführungsform mit den diskreten Absetzpositionen heißt das, dass diese ebenfalls und in ausreichend vielen Reihen über die Gesamtheit der Formierelemente angeordnet sind. Ebenso gilt es, die diskreten Absetzpositionen an den Typ der zu verpackenden Artikel anzupassen. Die Formierelemente haben für die Artikel diskrete Absetzpositionen ausgebildet, in denen die zu verpackenden Artikel während der Formierung sicher gehalten sind. Es ist selbstverständlich, dass die Absetzpositionen in Abhängigkeit vom Typ des zu verpackenden Artikels anzupassen sind. Im Falle der anderen Ausführungsform mit den Absetzebenen sollte sichergestellt sein, dass diese ausreichend Platz für die abzusetzenden Artikel bieten. In beiden Fällen der Ausführungsformen verfahren dann die
Formierelemente der Formiereinheit die aufgereihten Artikel unabhängig und getrennt voneinander zu Gruppen von Artikeln oder vereinzelten Artikeln. In beiden Fällen werden durch das Verfahren der Formierelemente Lücken in den Reihen der Artikel gebildet.

In einer bevorzugten Ausführungsform der Einrichtung ist der Zuförderer ein Gassenförder, bei dem die Artikel in Gassen geführt werden. Der Zuförderer ist durch erste Trennelemente in Gassen eingeteilt, die in Laufrichtung ausgerichet sind. Die auf die Formiereinheit umzusetzenden Reihen der Artikel werden im Fall der T-Form quer über mehrere benachbarte Gassen des Zuförderers gebildet. Falls die H-Form vorliegt, werden eine oder mehrere Abschnitte der Reihen von Artikeln in den Gassen von dem ersten Umsetzer gegriffen und umgesetzt. In beiden Fällen wird mindestens eine solche Reihe vom ersten Umsetzer von den Gassen abgegriffen, hochgehoben und auf die Formiereinheit abgesetzt. Das Verfahren erfolgt dann wie oben bereits beschrieben.

Der erste Umsetzer hat üblicherweise mindestens ein Greifelement je zu greifendem Artikel und mindestens eine Reihe von Greifelementen.

Bei dem erfindungsgemäßen Verfahren zum Verpacken einer Vielzahl von Artikeln wird mindestens eine Reihe der Artikel auf einem Zuförderer gebildet. Die mindestens eine Reihe wird von dem ersten Umsetzer auf eine Formiereinheit umgesetzt. Die Artikel der mindestens einen Reihe werden durch eine Vielzahl von individuell angetriebenen Formierelementen der Formiereinheit individuell verfahren. Anschließend werden die formierten Artikel durch die Formierelemente durch den zweiten Umsetzer in eine Verpackung umgesetzt. Optional und zusätzlich werden die Artikel nach ihrem individuellen Verfahren erneut zur weiteren Verarbeitung umgesetzt. Beispielsweise werden die formierten Artikel zum Verpacken durch einen zweiten Umsetzer in eine Verpackung abstellt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.

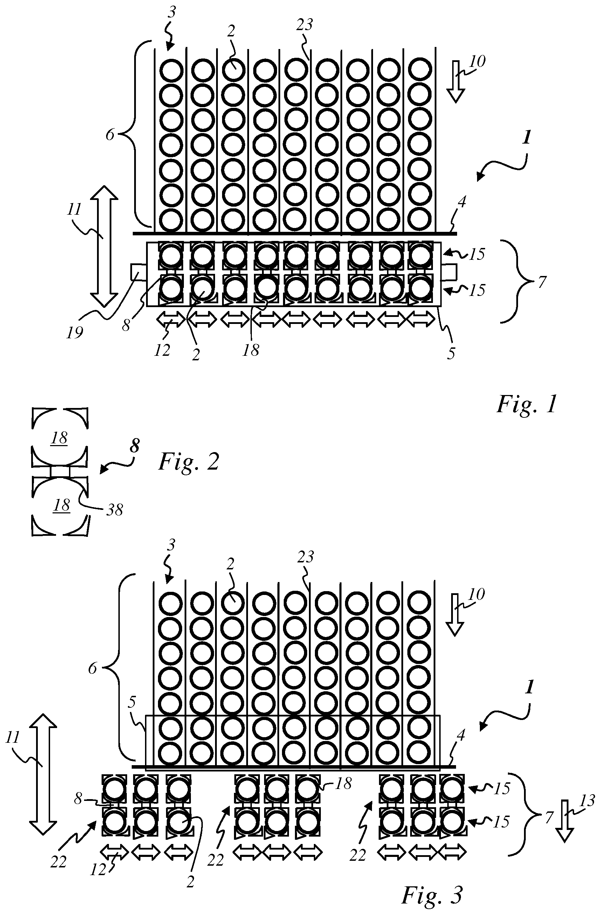

Figur 1 zeigt eine teilweise und schematische Draufsicht einer Ausführungsform der erfindungsgemäßen Einrichtung zum Verpacken vor der Formierung der Artikel.
Figur 2 zeigt eine schematische Draufsicht auf ein Formierelement, wie es in der Ausführungsform der Einrichtung nach Figur 1 verwendet wird.
Figur 3 zeigt eine teilweise und schematische Draufsicht der Einrichtung gemäß Figur 1 nach der Formierung der Artikel.

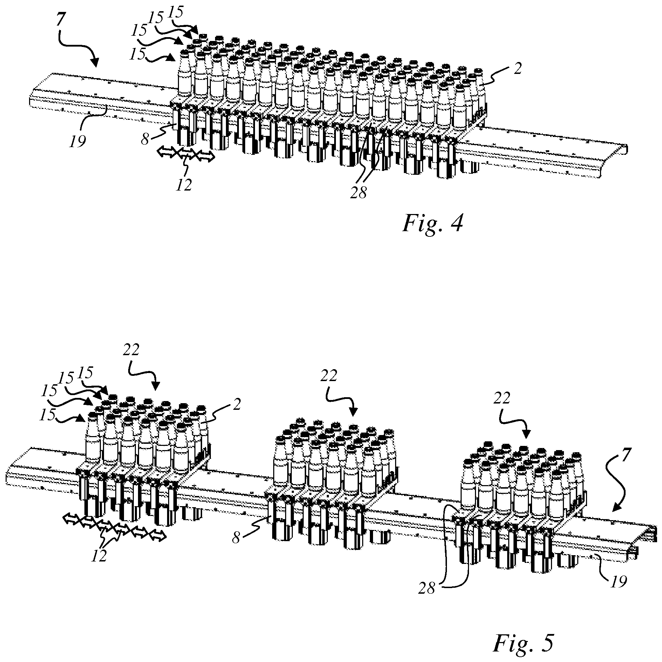

Figur 4 zeigt eine Perspektivansicht einer Ausführungsform einer erfindungsgemäßen Formiereinheit vor Verfahren der Formierelemente.
Figur 5 zeigt eine Perspektivansicht der Formiereinheit nach Figur 4, nachdem die Formierelemente die Artikel in Gruppen formiert haben.

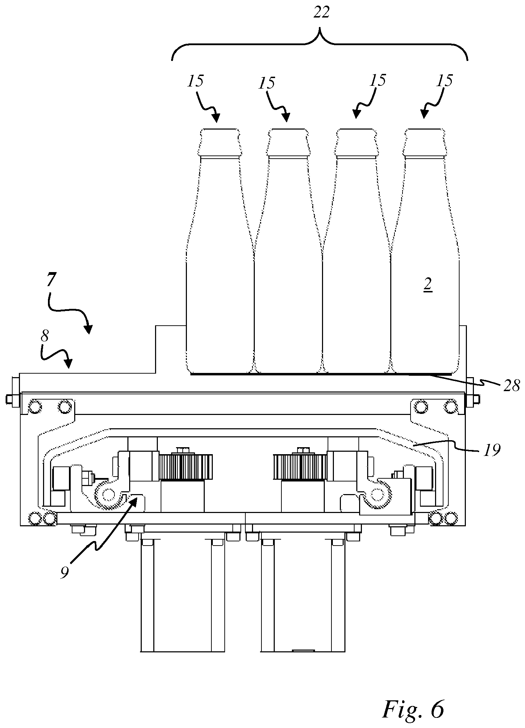

Figur 6 zeigt eine Seitenansicht der Formiereinheit, wobei ein einzelnes erfindungsgemäßes Formierelement nach Figur 4 zu sehen ist.

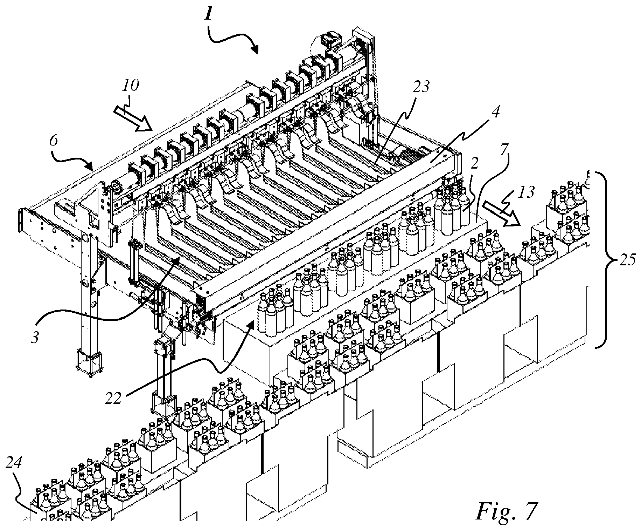

Figur 7 zeigt eine Perspektivansicht einer Ausführungsform der erfindungsgemäßen Einrichtung mit einer Formiereinheit, der einer Verpackungseinheit vorgeordnet ist.

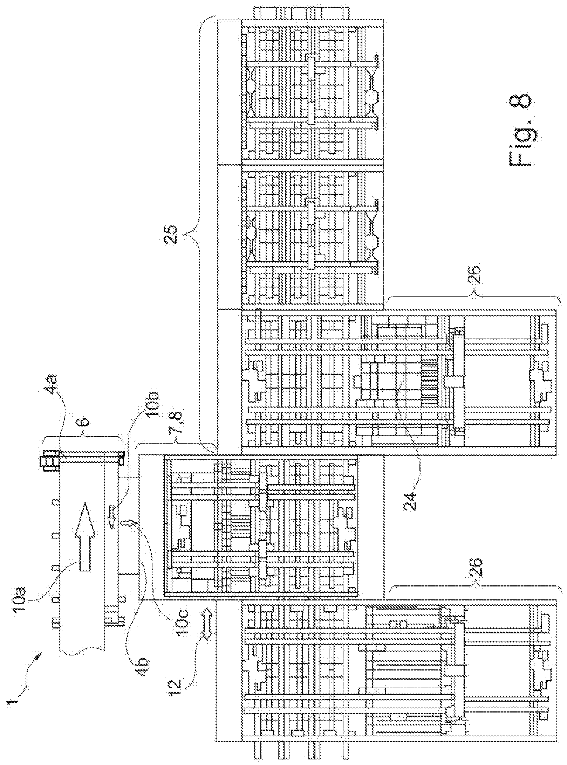

Figur 8 zeigt eine Draufsicht einer modular aufgebauten Einrichtung zum Verpacken, wobei einem Modul die erfindungsgemäße Formiereinheit zugeordnet ist.

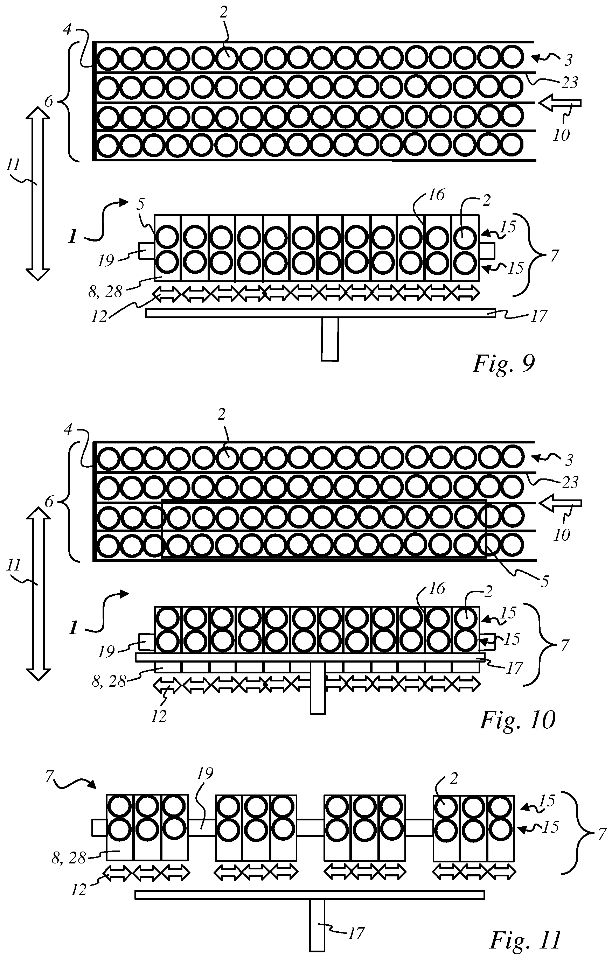

Figur 9 zeigt eine teilweise und schematische Draufsicht einer anderen Ausführungsform der erfindungsgemäßen Einrichtung zum Verpacken vor der Formierung der Artikel.
Figur 10 zeigt eine teilweise und schematische Draufsicht der Einrichtung gemäß Figur 9 nach der Formierung der Artikel.
Figur 11 zeigt eine teilweise und schematische Draufsicht der Formiereinheit gemäß Figur 9 und 10, nachdem die Formierung der Artikel in Gruppen abgeschlossen ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

**Figur 1** zeigt eine teilweise und schematische Draufsicht einer Ausführungsform der erfindungsgemäßen Einrichtung 1 zum Verpacken vor der Formierung von Artikeln 2. Der Zuförderer 6 ist ein Gassenförder, bei dem die Artikel 2 in durch erste Trennelemente 23 eingeteilte Gassen 3 geführt werden.

Durch einen ersten Umsetzer 5 sind die Artikel 2 von einem Zuförderer 6 auf eine Formiereinheit 7 abstellbar. Dafür wird der erste Umsetzer 5 in einer Umsetzrichtung 11 zwischen dem Zuförderer 6 und der Formiereinheit 7 hin und her bewegt. Die Formiereinheit 7 wird dabei entlang einer Schiene 19 hin und her bewegt, die sich unterhalb der Formiereinheit 7 befindet. Die auf die Formiereinheit 7 umzusetzenden Reihen 15 der Artikel 2 werden quer über mehrere benachbarte Gassen 3 des Gassenförders 6 gebildet. Der erste Umsetzer 5 befindet sich in Figur 1 über der Formiereinheit 7.

In der dargestellten Ausführungsform umfasst der Zuförderer 6 bezüglich der Laufrichtung 10 an seinem Ende einen Anschlag 4. Bei Erreichen des Anschlags 4 werden die Artikel 2 in Reihen 15 quer zur Laufrichtung 10 aufgestaut. Mindestens eine solche Reihe 15, in Figur 1 sind das zwei Reihen 15, wird durch den ersten Umsetzer 5 quer über die Gassen 3 abgegriffen, hochgehoben und auf die Formiereinheit 7 abgesetzt.

Die Formiereinheit 7 umfasst erfindungsgemäß eine Vielzahl von Formierelementen 8. Jedes Formierelement 8 umfasst mindestens einen eigenen Antrieb 9 (siehe Figur 6) und mindestens eine diskrete Absetzposition 18 für den jeweils abzusetzenden Artikel 2. In der dargestellten Ausführungsform gemäß den Figuren 1 bis 3 umfasst jedes Formierelement 8 zwei diskrete Absetzpositionen 18 passend zu den zwei umzusetzenden Reihen 15 von Artikeln 2. Statt durch den ersten Umsetzer 5 werden die Artikel 2 also durch die Formierelemente 8 verschoben. Die Formierrichtung 12 beim Verfahren der Formierelemente 8 ist in der dargestellten Ausführungsform quer zur Laufrichtung 10 des Zuförderers 6, das heißt der Gassenförderer 6 und die Formiereinheit 7 sind in der sogenannten T-Form zueinander angeordnet.

Die Formierelemente 8 der Formiereinheit 7 verfahren dann die aufgereihten Artikel 2 unabhängig und getrennt voneinander zu Gruppen 22 von Artikeln 2 (siehe Figur 3) oder vereinzelten Artikeln 2 (nicht dargestellt).

**Figur 2** zeigt eine schematische Draufsicht auf ein Formierelement 8, wie es in der Ausführungsform der Einrichtung 1 nach Figur 1 und 3 verwendet wird. In der dargestellten Ausführungsform gemäß Figur 2 umfasst das Formierelement 8 zwei diskrete Absetzpositionen 18 mit zumindest abschnittsweisen Berandungen 38, so dass die Artikel 2 nicht verschiebbar sind, wenn sie auf den diskreten Absetzpositionen 18 abgesetzt sind.

**Figur 3** zeigt eine teilweise und schematische Draufsicht der Einrichtung 1 gemäß Figur 1, nachdem die Formierung der Artikel 2 in Gruppen 22 abgeschlossen ist. Der erste Umsetzer 5 befindet sich wieder über dem Zuförderer 6, bereit zum Aufnehmen nächster Reihen 15 von Artikeln 2. Jede Gruppe 22 ist hier aus zwei Reihen 15 zu je drei Artikeln 2, also ingesamt aus sechs Artikeln 2, gebildet. Durch das Verfahren der Formierelemente 8 wurden in den Reihen 15 der Artikel 2 Lücken zwischen den Gruppen 22 gebildet.

Dadurch dass die Formierelemente 8 und die darauf abgesetzten Artikel 2 getrennt und unabhängig voneinander verfahren werden können, sind beliebige Formationen von Gruppen 22 möglich. Entsprechend sind bei der Weiterverarbeitung und Verpackung beliebige Gebindeformationen von Artikeln 2 möglich. Die durch die Formierelemente 8 solchermaßen vereinzelten Artikel 2 oder Gruppen 22 von Artikeln 2 werden dann in einer Abführichtung 13 einer Weiterverarbeitung zugeführt. Beispielsweise werden die vereinzelten Artikel 2 beziehungsweise die Gruppen 22 von Artikeln 2 in eine Verpackung abgesetzt und verpackt. Dafür kann ein zweiter Umsetzer (nicht dargestellt) vorgesehen sein, der die formierten Artikel 2 beziehungsweise Gruppen 22 in die Verpackungen einsetzt.

In der Ausführungsform nach den Figuren 1 bis 3 ist die Anzahl der Reihen von Greifelementen des ersten Umsetzers 5 gleich der Anzahl der Reihen der diskreten Absetzpositionen 18 der Formiereinheit 7 beziehungsweise der Formierelemente 8. Diese beiden gleichen Anzahlen sind wiederum gleich der Anzahl der umzusetzenden Reihen 15 von Artikeln 2, nämlich der Anzahl zwei. Für einen Fachmann ist jedoch offensichtlich, dass die Anzahlen auch ungleich sein können, ohne den Schutzbereich der Erfindung zu verlasssen.

**Figur 4** zeigt eine Perspektivansicht einer Ausführungsform einer erfindungsgemäßen Formiereinheit 7, bevor die Formierelemente 8 mit den darauf abgesetzen Artikeln 2 verfahren werden. Die Formierelemente 8 einschließlich der darauf abgestellten Artikel 2 werden durch ihre Antriebe 9 (siehe Figur 6) einzeln und unabhängig voneinander entlang einer Schiene 19 in der Formierrichtung 12 bewegt beziehungsweise verfahren. Die Artikel 2 sind in vier Reihen 15 auf den Absetzebenen 28 der Formierelemente 8 abgesetzt. Mehrere Artikel 2 können auf einer Absetzebene 28 durch einen Schieber 17 (siehe Figuren 9 bis 11) zusammengeschoben werden, beispielsweise wie oben beschrieben, als lückenlos formierte Gruppen 22 von Artikeln 2 verpackt werden.

**Figur 5** zeigt eine Perspektivansicht der Formiereinheit 7 nach Figur 4, nachdem die Formierelemente 8 die Artikel 2 in Gruppen 22 formiert haben, hier in drei Gruppen 22 zu je vier Reihen 15 von jeweils sechs Artikeln 2.

**Figur 6** zeigt eine Seitenansicht der Formiereinheit 7, wobei ein einzelnes erfindungsgemäßes Formierelement 8 nach Figur 4 und 5 zu sehen ist. Unterhalb der Absetzebene 28 und auch unterhalb der Schiene 19 sind die Antriebe 9 vorgesehen.

**Figur 7** zeigt eine Perspektivansicht einer Ausführungsform der erfindungsgemäßen Einrichtung 1 mit einer Formiereinheit 7, die einer Verpackungseinheit 25 vorgeordnet ist. Alle Elemente sind in den vorangehenden Figuren bereits beschrieben. Die Formiereinheit 7 ist lediglich schematisch und ohne die Formierelemente 8 angedeutet nach dem Zuförderer 6 mit Gassen 3 und vor der Weiterverarbeitungseinheit (Verpackungseinheit) 25, wo die Gruppen 22 von Artikeln 2 jeweils in Verpackungen 24 (Kartons) verpackt werden.

**Figur 8** zeigt eine Draufsicht einer modular aufgebauten Einrichtung 1 zum Verpacken von Artikeln 2, wobei einem Modul der Einrichtung 1 die erfindungsgemäße Formiereinheit 7 zugeordnet ist. Die Artikel 2 werden auf einem Zuförderer 6 in Laufrichtung 10a zur Formiereinheit 7 mit ihren Formierelementen 8 gefördert. Dabei werden die Artikel 2 zunächst an einem ersten Anschlag 4a des Zuförderers 6 aufgestaut. Einige der Artikel 2 werden mittels eines sogenannten Free-Flows zur besseren und gleichmäßigeren Artikelverteilung zurück in der Laufrichtung 10b und dann quer dazu in Laufrichtung 10c bis zu einem zweiten Anschlag 4b gefördert. Der erste Umsetzer 5 ist nicht dargestellt.

In einer dem Zuförderer 6 und der Formiereinheit 7 nachgeordneten Weiterverarbeitungseinheit 25 aus drei Modulen werden die formierten Artikel 2 in Kartons 24 oder Verpackungen anderer Art verpackt. Die Kartons 24 werden der Verpackungseinheit 25 durch zwei Kartonmagazine 26 bereitgestellt.

**Figur 9** zeigt eine teilweise und schematische Draufsicht einer anderen Ausführungsform der erfindungsgemäßen Einrichtung 1 zum Verpacken vor der Formierung der Artikel 2.

Im Gegensatz zu den Figuren 1, 3, 7 und 8 ist in der dargestellten Ausführungsform nach Figur 9 die Formierrichtung 12 beim Verfahren der Formiereinheiten 8 parallel zur Laufrichtung 10 des Zuförderers 6. Die Umsetzrichtung 11 ist quer zur Formierrichtung 12 und auch quer zur Laufrichtung 10, das heißt der Gassenförderer 6, die Formiereinheit 7 und die Umsetzrichtung 11 sind in der sogenannten H-Form angeordnet.

Ein Schieber 17 ist vorgesehen, der die Artikel 2 auf den Absetzebenen 28 parallel zu und geführt entlang den jeweiligen zweiten Trennelementen 16 Stoß an Stoß beziehungsweise lückenlos zusammenschieben kann (siehe Figur 10).

**Figur 10** zeigt eine teilweise und schematische Draufsicht der Einrichtung 1 gemäß Figur 9, nachdem die Artikel 2 an jeweils ein Ende der Formierelemente 8 geschoben wurden. Der erste Umsetzer 5 befindet sich wieder über dem Zuförderer 6, bereit zum Aufnehmen nächster Reihen 15 von Artikeln 2.

**Figur 11** zeigt eine teilweise und schematische Draufsicht der Formiereinheit 7 gemäß Figur 9 und 10, nachdem die Formierung der Artikel 2 in Gruppen 22 abgeschlossen ist. Der Schieber 17 wurde von der Formiereinheit 7 weggezogen. Jede Gruppe 22 ist hier aus zwei Reihen 15 zu je drei Artikeln 2, also ingesamt aus sechs Artikeln 2, gebildet. Durch das Verfahren der Formierelemente 8 wurden in den Reihen 15 der Artikel 2 Lücken zwischen den Gruppen 22 gebildet.

Wie oben bereits erwähnt, sind auch hier wieder durch entsprechenden individuelles Verfahren der Formierelemente 8 und der darauf abgesetzten Artikel 2 beliebige Formationen von Gruppen 22 möglich. Entsprechend sind auch hier bei der Weiterverarbeitung und Verpackung beliebige Gebindeformationen von Artikeln 2 möglich, wie oben beschrieben.

In den Figuren 9 bis 11 wird das Zusammenschieben der Artikel 2 vor dem Bewegen beziehungsweise Verfahren der Formierelemente 8 durchgeführt. Wie oben beschrieben, kann das Zusammenschieben jedoch auch während oder nach dem Verfahren der Formierelemente 8 durchgeführt werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

1 Einrichtung zum Verpacken von Artikeln
2 Artikel
3 Gasse
4, 4a, 4b Anschlag
5 erster Umsetzer (Robotergreifer)
6 Zuförderer
7 Formiereinheit
8 Formierelement
9 Antrieb
10, 10a, 10b, 10c Laufrichtung
11 Umsetzrichtung
12 Formierrichtung
13 Abführrichtung
15 Reihe
16 zweites Trennelement
17 Schieber (Pusher)
18 Absetzposition
19 Schiene
22 Gruppe von Artikeln
23 erstes Trennelement
24 Verpackung (Karton)
25 Weiterverarbeitungseinheit (Verpackungseinheit)
26 Kartonmagazin
28 Absetzebene
38 Berandung

## Patentansprüche

1. Formiereinheit (7) für eine Vielzahl von Artikeln (2) in einer Einrichtung (1) zum Verpacken der Artikel (2), wobei die Einrichtung (1) einen ersten Umsetzer (5) und einen zweiten Umsetzer umfasst, und dass zumindest eine Reihe (15) der Artikel (2) durch den ersten Umsetzer (5) von einem Zuförderer (6) auf die Formiereinheit (7) mit einer Vielzahl von Formierelementen (8) abstellbar sind, **dadurch gekennzeichnet, dass** jedes Formierelement (8) mindestens einen eigenen, individuell ansteuerbaren Antrieb (9) und eine Absetzebene (28) für mindestens einen Artikel (2) umfasst, und dass durch den zweiten Umsetzer die durch die Formierelemente (8) formierten Artikel (2) in eine Verpackung (24) einsetzbar sind, wobei der zweite Umsetzer zum Ergreifen der formierten Artikel (2) entsprechend ausgebildet ist.

2. Formiereinheit (7) nach Anspruch 1, wobei jedes Formierelement (8) mindestens eine diskrete Absetzposition (18) für den jeweils abzusetzenden Artikel (2) umfasst.

3. Formiereinheit (7) nach Anspruch 1, wobei an jeder Absetzebene (28) zwei parallele zweite Trennelemente (16) derart angebracht sind, dass die auf die Absetzebene (28) abgesetzten Artikel (2) parallel zu den jeweiligen zweiten Trennelementen (16) verschiebbar sind.

4. Formiereinheit (7) nach Anspruch 1, wobei ein Schieber (17) vorgesehen ist, durch den die auf den Absetzebenen (28) der Formierelemente (8) abgesetzten Artikel (2) derart verschiebbar sind, dass die Artikel lückenlos in den einzelnen Formierelementen (8) aneinander liegen.

5. Formiereinheit (7) nach einem der voranstehenden Ansprüche, wobei die Einrichtung (1) einen Anschlag (4) für die Artikel (2) umfasst, an dem sich mindestens eine durch den ersten Umsetzer (5) umzusetzende Reihe (15) von Artikeln (2) bildet.

6. Formiereinheit (7) nach einem der voranstehenden Ansprüche, wobei die Formierelemente (8) in einer Formierrichtung (12) quer zu einer Laufrichtung (10, 10a, 10b, 10c) des Zuförderers (6) verfahrbar sind.

7. Formiereinheit (7) nach einem der Ansprüche 1 bis 5, wobei die Formierelemente (8) in einer Formierrichtung (12) parallel zu einer Laufrichtung (10, 10a, 10b) des Zuförderers (6) verfahrbar sind.

8. Formiereinheit (7) nach einem der voranstehenden Ansprüche, wobei die Artikel (2) in durch erste Trennelemente (23) getrennten Gassen (3) der Formiereinheit (7) zuführbar sind.

9. Formiereinheit (7) nach einem der vorangehenden Ansprüche, wobei die Formierelemente (8) entlang mindestens einer Schiene (19) geführt sind.

10. Verfahren zum Verpacken einer Vielzahl von Artikeln (2), **gekennzeichnet durch** die folgenden Schritte:
• Bilden mindestens einer Reihe (15) der Artikel (2) auf einem Zuförderer (6);
• Umsetzen der mindestens einen Reihe (15) von dem Zuförderer (6) auf eine Formiereinheit (7) durch einen ersten Umsetzer (5);
• Individuelles Bewegen der Artikel (2) der mindestens einen Reihe (15) durch eine Vielzahl von individuell angetriebenen und angesteuerten Formierelementen (8) der Formiereinheit (7); und
• Umsetzen der durch die Formierlemente (8) formierten Artikel (2) durch einen zweiten Umsetzer in eine Verpackung (24).

11. Verfahren nach Anspruch 10, wobei die Artikel (2) nach ihrem individuellen Verfahren erneut zur weiteren Verarbeitung in einer Einrichtung (1) mit einem zweiten Umsetzer umgesetzt werden, wobei der zweite Umsetzer an die mit der Formiereinheit (7) formierten Artikel (2) angepasst ist.

## Claims

1. A forming unit (7) for a plurality of items (2) in a device (1) for packaging the items (2), wherein the device (1) comprises a first transposer (5) and a second transposer, and wherein at least one row (15) of the items (2) is depositable by the first transposer (5) from a feed conveyor (6) onto the forming unit (7) with a plurality of forming elements (8),
**characterized in that**
each forming element (8) comprises at least one own, individually controllable drive (9) and a placement plane (28) for at least one item (2), and **in that** the items (2) formed by the forming elements (8) are insertable by the second transposer into a package (24), wherein the second transposer for gripping the formed items (2) is constructed accordingly.

2. The forming unit (7) according to claim 1, wherein each forming element (8) comprises at least one discrete placement position (18) for the respective item (2) which is to be deposited.

3. The forming unit (7) according to claim 1, wherein two parallel second separating elements (16) are mounted at each placement plane (28), so that the items (2) deposited on the placement plane (28) are shiftable parallel to the respective second separating elements (16).

4. The forming unit (7) according to claim 1, wherein a slider (17) is provided, by means of which the items (2) placed on the depositing planes (28) of the forming elements (8) are displaceable in such a way, that the items are arranged without gaps against one another in the individual forming elements (8).

5. The forming unit (7) according to anyone of the preceding claims, wherein the device (1) comprises a stop (4) for the items (2), at which at least one row (15) of items (2), which is to be transposed by the first transposer (5), is formed.

6. The forming unit (7) according to anyone of the preceding claims, wherein the forming elements (8) are movable in a forming direction (12) transversely to a running direction (10, 10a, 10b, 10c) of the feed conveyor (6).

7. The forming unit (7) according to anyone of the claims 1 to 5, wherein the forming elements (8) are movable in a forming direction (12) parallel to a running direction (10, 10a, 10b) of the feed conveyor (6).

8. The forming unit (7) according to anyone of the preceding claims, wherein the items (2) are supplyable in lanes (3) to the forming unit (7), the lanes (3) being separated by first separated elements (23).

9. The forming unit (7) according to anyone of the preceding claims, wherein the forming elements (8) are guided along at least one rail (19).

10. A method for packing a plurality of items (2), **characterized by** the following steps:
• forming at least one row (15) of the items (2) on a feed conveyor (6);
• transposing the at least one row (15) from the feed conveyer (6) to a forming unit (7) by means of a first transposer (5);
• individually moving the items (2) of the at least one row (15) by a plurality of individually driven and controlled forming elements (8) of the forming unit (7); and
• transposing the items (2), formed by the forming elements (8), by means of a second transposer into a package (24).

11. The method according to claim 10, wherein, after the step of individually moving the items (2), the items (2) are re-transposed for further processing in a device (1) by means of a second transposer, wherein the second transposer is adapted to the items (2) formed by the forming unit (7).

## Revendications

1. Unité de formage (7) d'une multitude d'articles (2) dans un dispositif (1) d'emballage des articles (2), le dispositif (1) comprenant un premier dispositif de transfert (5) et un second dispositif de transfert, et au moins une rangée (15) des articles (2) pouvant être posée sur l'unité de formage (7) pourvue d'une multitude d'éléments de formage (8) par le premier dispositif de transfert (5), à partir d'un convoyeur d'amenée (6),
**caractérisée en ce que**
chaque élément de formage (8) comprend au moins un entraînement (9) propre pouvant être commandé individuellement et un plan de dépose (28) pour au moins un article (2), et que les articles (2) formés par les éléments de formage (8) peuvent être insérés dans un emballage (24) par le second dispositif de transfert, le second dispositif de transfert étant conçu de manière appropriée pour saisir les articles (2) formés.

2. Unité de formage (7) selon la revendication 1, dans laquelle chaque élément de formage (8) comprend au moins une position de dépose (18) discrète pour chaque article (2) qui doit être posé.

3. Unité de formage (7) selon la revendication 1, dans laquelle deux seconds éléments de séparation (16) parallèles sont montés sur chaque plan de dépose (28) de telle manière que les articles (2) posés sur le plan de dépose (28) puissent être déplacés parallèlement aux seconds éléments de séparation (16) respectifs.

4. Unité de formage (7) selon la revendication 1, dans laquelle est prévu un coulisseau (17) par lequel les articles (2) posés sur les plans de dépose (28) des éléments de formage (8) peuvent être déplacés de telle manière que les articles soient disposés côte à côte, sans intervalles, dans les éléments de formage (8) individuels.

5. Unité de formage (7) selon l'une des revendications précédentes, dans laquelle le dispositif (1) comprend une butée (4) pour les articles (2) au niveau de laquelle se forme au moins une rangée (15) d'articles (2) qui doit être transférée par le premier dispositif de transfert (5).

6. Unité de formage (7) selon l'une des revendications précédentes, dans laquelle les éléments de formage (8) peuvent être déplacés dans un sens de formage (12) transversalement à un sens de transport (10, 10a, 10b) du convoyeur d'amenée (6).

7. Unité de formage (7) selon l'une des revendications 1 à 5, dans laquelle les éléments de formage (8) peuvent être déplacés dans un sens de formage (12) parallèlement à un sens de transport (10, 10a, 10b) du convoyeur d'amenée (6).

8. Unité de formage (7) selon l'une des revendications précédentes, dans laquelle les articles (2) peuvent être amenés à l'unité de formage (7) dans des couloirs (3) séparés par des premiers éléments de séparation (23).

9. Unité de formage (7) selon l'une des revendications précédentes, dans laquelle les éléments de formage (8) sont guidés le long d'au moins un rail (19).

10. Procédé d'emballage d'une multitude d'articles (2), **caractérisé par** les étapes suivantes:
• former au moins une rangée (15) des articles (2) sur un convoyeur d'amenée;
• transférer l'au moins une rangée (15) sur une unité de formage (7) par un premier dispositif de transfert (5), à partir du convoyeur d'amenée (6);
• déplacer individuellement les articles (2) de l'au moins une rangée (15) par une multitude d'éléments de formage (8) de l'unité de formage (7) entraînés et commandés individuellement; et
• transférer les articles (2) formés par les éléments de formage (8) dans un emballage (24) par un second dispositif de transfert.

11. Procédé selon la revendication 10, dans lequel, après le déplacement individuel des articles (2), ceux-ci sont transférés de nouveau dans un dispositif (1) par un second dispositif de transfert pour être traités ultérieurement, le second dispositif de transfert étant adapté aux articles (2) formés par l'unité de formage (7).
